Europäisches Patentamt

European Patent Office

Office européen des brevets

(11) Veröffentlichungsnummer: **0 276 629 B1**

# EUROPÄISCHE PATENTSCHRIFT

(45) Veröffentlichungstag der Patentschrift: **02.10.91**

(51) Int. Cl.⁵: **D05B 19/00**, G05B 19/12

(21) Anmeldenummer: **87810722.6**

(22) Anmeldetag: **04.12.87**

(54) **Nähmaschine.**

(30) Priorität: **28.01.87 CH 291/87**

(43) Veröffentlichungstag der Anmeldung:
**03.08.88 Patentblatt 88/31**

(45) Bekanntmachung des Hinweises auf die
Patenterteilung:
**02.10.91 Patentblatt 91/40**

(84) Benannte Vertragsstaaten:
**DE GB IT SE**

(56) Entgegenhaltungen:
**FR-A- 2 357 678**
**FR-A- 2 537 298**
**US-A- 4 406 235**

(73) Patentinhaber: **FRITZ GEGAUF AG BERNINA-
NÄHMASCHINENFABRIK
Seestrasse
CH-8266 Steckborn(CH)**

(72) Erfinder: **Gaeumann, Alfred
Seestrasse 112a
CH-8266 Steckborn(CH)**
Erfinder: **Hangarter, Otto
Im Bohl 12
W-7763 Oehningen-Wangen(DE)**
Erfinder: **Stillhard, Otmar
Ofenbachstrasse 14
CH-8266 Steckborn(CH)**

(74) Vertreter: **Steiner, Martin et al
c/o AMMANN PATENTANWÄLTE AG BERN
Schwarztorstrasse 31
CH-3001 Bern(CH)**

**Beschreibung**

Die vorliegende Erfindung betrifft eine Nähmaschine mit elektronischer Stichmuster-Steuerung, gemäss dem Oberbegriff des Anspruchs 1. Derartige Nähmaschinen mit auswechselbaren Speichern sind bekannt, doch war in keinem Falle eine Lösung vorgeschlagen, die ein einfaches sicheres Auswechseln von Speichereinheiten und ein sicheres Zuordnen und Auswählen der gewünschten Stichmuster durch Bedienungspersonal, insbesondere Hausfrauen vorsehen bzw. erlauben.

So ist es bekannt, die Nähmaschine mit einem separaten elektronischen Steuermodul auszurüsten, welches Modul auch Bedienungselemente, insbesondere Tasten zur Auswahl der gewünschten Maschinenfunktionen aufweist (US-A-4 055 131). In diesem Falle ist lediglich eine Vereinfachung des Nähmaschinenaufbaus beziehungsweise der Wartung der Maschine durch Fachpersonal angestrebt, nicht aber ein Austausch durch eine Bedienungsperson. Eine ähnliche Lösung ist aus der US-A 4 406 235 bekannt, wobei die Module als vollständige Frontpanels ausgebildet sind, welche wahlweise mit einer Grundausführung der Nähmaschine verbunden werden können. Die Verbindung erfolgt hierbei über ein Kabel. Auch in diesem Falle besteht nur die Absicht, die fabrikmässige Herstellung verschiedener Nähmaschinenmodelle zu vereinfachen. Eine Auswechslung des Moduls durch den Besitzer der Maschine beziehungsweise die Bedienungsperson ist weder möglich noch vorgesehen.

Die US-A 4 203 378 zeigt eine Nähmaschine mit austauschbarer Speichereinheit für verschiedene Stichmuster. Diese Speichereinheit besteht aus einer flachen Platte, die in eine Aussparung des Maschinengehäuses eingelegt und mit einem Deckel abgedeckt wird. Die Speichereinheit bildet somit Bestandteil der fabrikmässig hergestellten Maschine, und es ist nicht an eine Auswechslung der Speichereinheit durch das Bedienungspersonal gedacht. Es besteht lediglich die Absicht, im Falle von Weiterentwicklungen der Maschine nur die Speichereinheit nicht aber die gesamte Elektronik anpassen zu müssen.

Es ist auch bekannt, in einen Schlitz an der Nähmaschine eine Kassette einzuschieben, die Daten zur Steuerung bestimmter Programme trägt (US-PS 4,475,784). In eingesetztem Zustand ist jedoch die Kassette nur noch zu einem Kleinen Teil sichtbar, so dass eine einfache, zweifelsfreie Auswahl eines gewünschten Programmes bei mit der Nähmaschine verbundener Kassette nicht mehr möglich ist.

Ziel vorliegender Erfindung ist demgegenüber die Schaffung von kostengünstigen und leicht zu handhabenden Austausch-Einheiten für eine Vielzahl von verschiedenen Stichmustern, welche durch technisch ungebildetes Bedienungspersonal ausgewechselt werden können und welche eine eindeutige Zuordnung der gespeicherten Steuerdaten zu bestimmten Stichmustern gestatten. Dieses Ziel wird gemäss dem kennzeichnenden Teil des Anspruchs 1 erreicht. Der Modul ist sehr einfach, indem er frei ist von Bedienungsorganen, und er bleibt in seinem mit der Nähmaschine verbundenen Zustand sichtbar, so dass auf dem Modul aufgebrachte Stichsymbole sowie denselben zugeordnete Nummern sichtbar bleiben. Besonders wenn mehrere Moduln vorgesehen sind, werden damit Verwechslungen durch falsche Zuordnung ausgeschlossen. Die Wahl einer neuen Stichart kann erfolgen, ohne den Modul aus der Nähmaschine zu entfernen.

Vorzugsweise weist der Modul eine Platte auf, die einseitig mit den Speichern versehen ist und deren andere Seite mit Stichsymbolen versehen ist. Dieser Modul kann in eine geeignete Führung des Nähmaschinengehäuses eingeschoben werden, wobei Kontakte der innenliegenden Speicher mit Gegenkontakten der Nähmaschine in Berührung gelangen während die an der Aussenseite angebrachten Stichsymbole sichtbar bleiben.

Im weiteren ist es von besonderem Vorteil, den Modul mit einem Mikroprozessor zu versehen, insbesondere den Modul mit einer Mikroprozessorkarte (Smart card) zu versehen. In diesem Falle wird eine serielle Datenübertragung zwischen dem Mikroprozessor des Moduls und demjenigen der Nähmaschine möglich, was erlaubt, mit verhältnismässig sehr wenigen Verbindungsleitungen beziehungsweise Anschlusskontakten auszukommen. Damit wird erheblich zur Vereinfachung und zur erfindungsgemässen Verwendung des Moduls beigetragen.

Die Erfindung wird nun anhand zweier in der Zeichnung dargestellten Ausführungsbeispiele näher erläutert.

Fig. 1    zeigt eine Teilansicht der Nähmaschine,

Fig. 2    ist ein Teilschnitt durch den in die Maschine eingesetzte Modul und seine Halterung,

Fig. 3    zeigt eine Rückansicht des Moduls,

Fig. 4    zeigt ein elektronisches Schaltschema, und

Fig. 5    zeigt schematisch Teile des zweiten Ausführungsbeispiels.

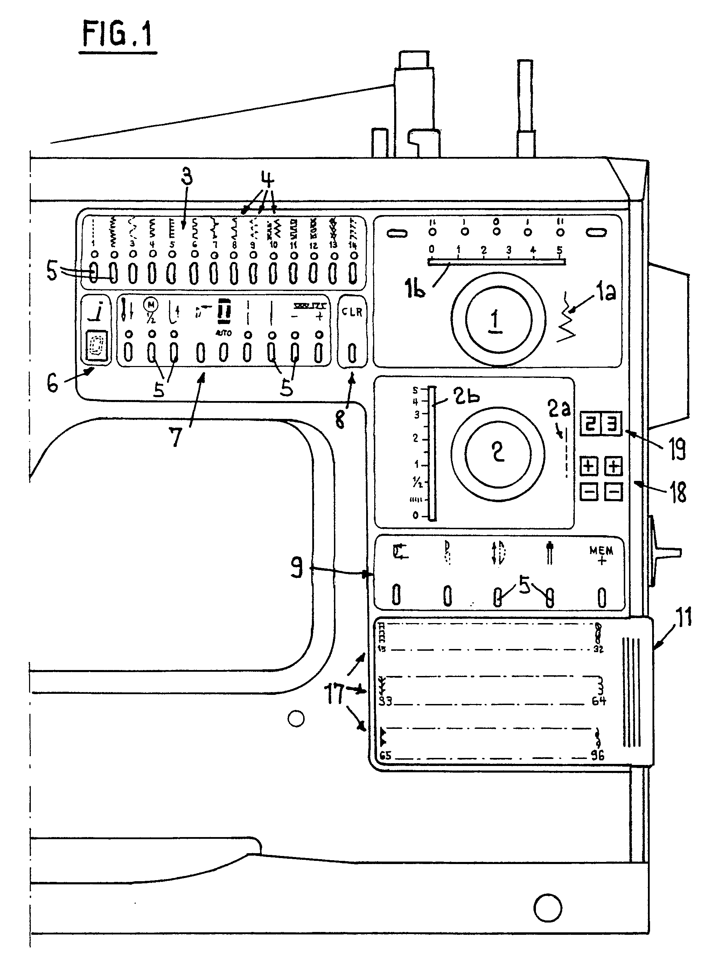

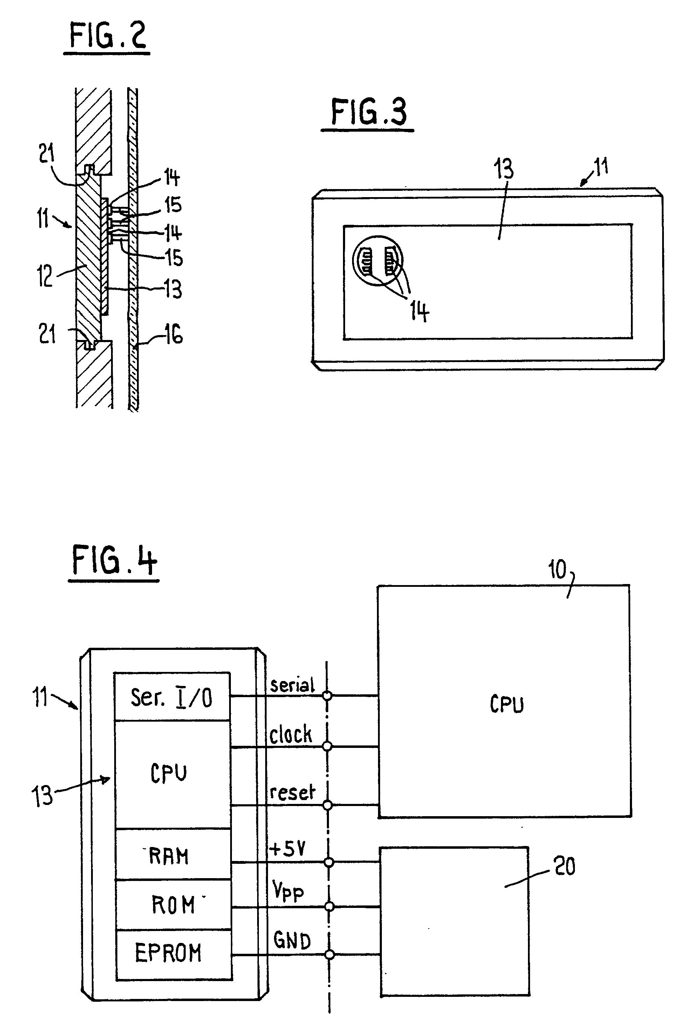

Das in Figur 1 gezeigte Bedienungs- und Anzeigefeld der Nähmaschine weist Einstellknöpfe 1 und 2 für die Stichbreite und Stichlänge auf, was durch Symbole 1a bzw. 2a angedeutet ist. Elektronische Anzeigebalken 1b bzw. 2b zeigen die eingestellte Stichbreite bzw. Stichlänge an. In einem Bereich 3 sind Nutzstiche 4 dargestellt, welche durch Betätigung je einer zugeordneten Taste 5 wählbar sind. Weitere Anzeige- und Bedienungsgruppen 6-9 für bestimmte Sticharten und Funktionen sind entsprechend dargestellt. Wesentlich ist, dass in der Nähmaschine ein Mikroprozessor 10 (Fig. 4) vorgesehen ist, in welchem unter anderem Speicher mit Daten zur Steuerung der Stichlänge und Stichbreite für die vorgesehenen Nähoperationen vorhanden sind. Es können dabei für bestimmte Nähoperationen bevorzugte Werte für die Stichlänge und/oder Stichbreite gespeichert sein, und diese Werte können durch blinkende Elemente der Anzeigen 1b bzw. 2b angezeigt werden. Abgesehen von den erwähnten Nutzstichen 4 können auch gewisse besonders oft angewandte Zierstiche fest eingespeichert sein. Vorzugsweise werden jedoch alle Steuerdaten für Zierstiche auf einfach auswechselbaren Moduln 11 untergebracht, die auswechselbar in eine Führung des Nähmaschinengehäuses eingesetzt werden können. Wie die Figuren 2 und 3 zeigen, besteht jeder Modul 11 aus einer Platte 12, vorzugsweise aus Kunststoff, mit deren Rückseite eine Mikroprozessorkarte (Smart card) 13 fest verbunden ist. Auf dieser Karte 13 ist ein Mikroprozessor angebracht, der Anschlusskontakte 14 aufweist. Bei eingeschobenem Modul gemäss Figuren 1 und 2 stehen diese Kontakte 14 in Verbindung mit Kontaktfedern 15 eines in der Nähmaschine angeordneten Kontaktträgers 16. Es kann sich hierbei um eine gedruckte Schaltung der Elektronik der Nähmaschine handeln. Wie Figur 1 zeigt, sind an der Vorderseite der Platte 12 jedes Moduls Zierstiche 17 dargestellt, welchen Nummern zugeordnet sind. Diese Nummern können mittels einer Wähltastatur 18 und einer zugeordneten Anzeige 19 am Maschinengehäuse eingestellt werden, um die Daten zur Steuerung des mit dieser Nummer bezeichneten Stichmusters abzurufen und den Nähvorgang entsprechend zu steuern.

Wie Figur 4 zeigt, wird der Mikroprozessor des Moduls 11 vom Netzgerät 20 der Nähmaschine über drei Anschlüsse gespeist. Die einzelnen Teile des Mikroprozessors des Moduls 11 bedürfen an sich keiner weiteren Beschreibung. Die Datenübermittlung aus einem der Speicher des Moduls 11 in den Mikroprozessor 10 der Nähmaschine erfolgt über eine serielle Schnittstelle, wobei Mittel vorgesehen sind, um die CPU des Moduls mit der CPU der Nähmaschine abzustimmen. Wie bereits erwähnt, erlaubt diese Anordnung beziehungsweise Betriebsart mit verhältnismässig wenigen Anschlusskontakten auszukommen, was andererseits eine einfache, robuste und somit betriebssichere Ausführung erlaubt und keine äusserst präzise Lage des Moduls in der Führung des Nähmaschinengehäuses erfordert. In Figur 2 ist eine einfache Führung in Nuten 21 einer Oeffnung des Nähmaschinengehäuses dargestellt und die Betriebsstellung des Moduls wird durch Anschlag desselben gegen den inneren Rand der Oeffnung bestimmt.

Die dargestellte und beschriebene Ausführung gestattet ein äusserst einfaches Auswechseln eines Moduls gegen einen anderen. Es ist somit möglich, den Nähmaschinenbesitzern eine beliebige Anzahl und Auswahl von Stichmustern beziehungsweise von Moduln zur Verfügung zu stellen, wobei immer wieder neue Moduln zur Verfügung gestellt werden können, die der Maschinenbesitzer sich zu einem verhältnismässig günstigen Preis beschaffen und bei Bedarf in die Maschine einsetzen kann. Auch wenn der Maschinenbesitzer über mehrere Moduln verfügt, sind Verwechslungen nicht möglich, weil die Sticharten direkt auf den Moduln dargestellt und denselben eine bestimmte Nummer zugeordnet ist. Da die Darstellungen der Stichmuster und die zugeordneten Nummern auch bei in die Maschine eingesetztem Modul immer noch sichtbar bleiben, sind Irtümer und Verwechslungen praktisch ausgeschlossen.

Es sind auch andere Ausführungen möglich. Die zusätzlichen Modulen 11 können nicht nur Daten für Zierstiche sondern auch für zusätzliche Nutzstiche oder andere Maschinenoperationen enthalten. Gegenbenenfalls können die Moduln auch nur Speicher aufweisen, die als zusätzliche Speicher an den Mikroprozessor der Nähmaschine angeschaltet werden können. Jeder Modul könnte auch mit verhältnismässig starken Steckkontakten ausgeführt sein, welche zur Verbindung des Moduls mit der Nähmaschine in Steckbuchsen derselben eingesteckt werden kann. Es wäre in diesem Falle nicht erforderlich, im Nähmaschinengehäuse eine eigentliche Ausnehmung mit Führungen zur Aufnahme eines Moduls vorzusehen. Etwas nachteilig wäre hierbei allerdings die nicht sehr flache Ausführung der Moduln.

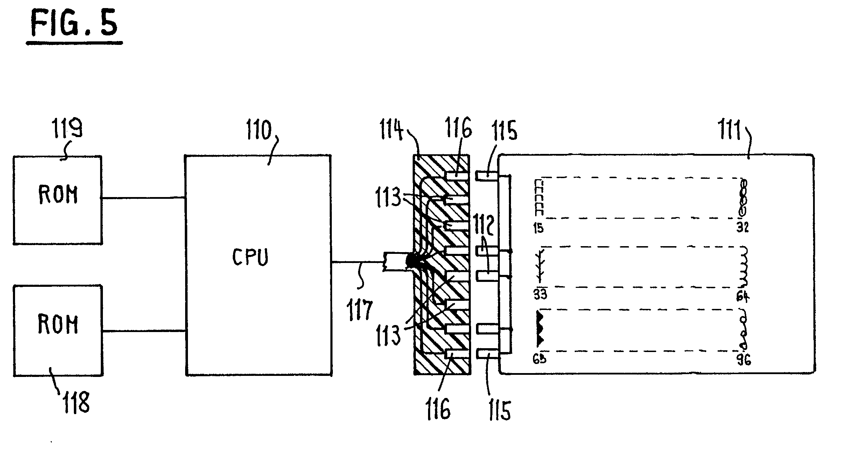

Die Ausführung nach Fig. 5 erlaubt eine weitere Vereinfachung in dem Sinne, dass der Modul als Karte 111 ausgebildet ist, deren Vorderseite gemäss Fig. 1 gestaltet ist, also Darstellungen der wählbaren Stichmuster und zugeordnete Nummern aufweist. An der einen Seite der Karte 111 sind codeartig angeordnete Kontaktstifte 112 befestigt, die in Buchsen 113 eines Codelesers 114 steckbar sind. Die Karte 111 weist ferner Kontaktstifte 115 auf, die in Buchsen 116 steckbar sind und damit eine sichere Steckverbindung der Karte mit dem Codeleser 114 ermöglichen. Die Buchsen 116 sind mit einer gemeinsamen Zuleitung verbunden, und die Kontaktstifte 115 sind mit allen vorhandenen Kontaktstiften 112 elektrisch verbunden, wie in Fig. 5 angedeutet. Je nach der Zahl und Anordnung von Kontaktstiften 112 gelangen damit bei eingesteckter Karte derselben zugeordnete Code-Signale an die Buchsen 113 und über ein Kabel 117 an die CPU 110 der Nähmaschine. Wie in Fig. 5 angedeutet, ist der CPU 110 ein Speicher 118 (ROM) zugeordnet, welcher Daten zur Steuerung von fest in der Maschine vorgesehenen Programmen enthält. Ein zweiter, zusätzlicher Speicher 119 (ROM) enthält Daten zur Steuerung von Sticharten, die auf der Karte 111 aufgezeichnet sind. Die Karte könnte an Stelle der Code-Kontaktstifte 112 einen Strichcode aufweisen, der durch einen entsprechenden Codeleser bei eingesteckter Karte gelesen werden kann. Wird nun bei eingesetzter Karte mittels der Tastatur 18 die Nummer des gewünschten, auf der Karte abgebildeten Stichmusters gewählt, ermittelt der Mikroprozessor der Nähmaschine den Speicherplatz, welcher der durch ihren Code gekennzeichneten Karte und der gewählten Stichmusternummer auf dieser Karte entspricht, und steuert die Nähmaschine mit den dort gespeicherten Daten. Es sind hierbei in der Maschine mehr Festspeicher erforderlich, die jedoch billig sind, während der Mikroprozessor auf dem Modul wegfällt. Im Falle eines Strichcodes oder dergleichen auf der Karte kann auch jede elektrische Verbindung zwischen Modul und Nähmaschine wegfallen.

**Patentansprüche**

1. Nähmaschine mit elektronischer Stichmuster-Steuerung, wobei mindestens ein mit der Elektronik der Nähmaschine wahlweise verbindbarer Modul vorgesehen ist, um eine Auswahl von Stichmustern anzubieten und wobei an der Nähmaschine Wählmittel zur Identifikation und Wahl von zusätzlichen Stichmustern vorgesehen sind, dadurch gekennzeichnet, dass mindestens ein flacher, kartenartiger, von Bedienungsorganen freier Modul (11, 111) vorgesehen ist, der durch Einschieben oder Aufstekken an der Frontwand des Nähmaschinengehäuses sichtbar einsetzbar ist, wobei die Sichtseite des Moduls mit Stichsymbolen (17) und denselben zugeordneten Bezeichnungen versehen ist und die genannten Wählmittel der Nähmaschine (18, 19) auf dem Modul angezeigte Stichmuster anhand der zugeordneten Bezeichnungen abzurufen gestatten und wobei durch das Einsetzen eines Moduls (11, 111) eine Datenübermittlung zwischen demselben und der Elektronik (10) der Nähmaschine ermöglicht wird.

2. Nähmaschine nach Anspruch 1, dadurch gekennzeichnet, dass der Modul (11) mit Speichern (RAM, ROM) versehen ist, und dass Daten aus den Speichern mittels der Wählmittel (18, 19) und der Elektronik (10) der Nähmaschine abrufbar sind.

3. Nähmaschine nach Anspruch 2, dadurch gekennzeichnet, dass der Modul einseitig mit den Speichern (RAM, ROM) versehen ist, und auf der anderen Seite mit Stichsymbolen (17) versehen ist.

4. Nähmaschine nach Anspruch 2 oder 3, dadurch gekennzeichnet, dass der Modul (11) mit einem Mikroprozessor (13) versehen ist.

5. Nähmaschine nach Anspruch 4, dadurch gekennzeichnet, dass ein Träger des Moduls einseitig mit einer Mikroprozessorkarte (13) (smart card) versehen ist.

6. Nähmaschine nach Anspruch 4 oder 5, dadurch gekennzeichnet, dass die Datenübertragung vom Modul (11) zum Mikroprozessor (10) der Nähmaschine über eine serielle Schnittstelle erfolgt.

7. Nähmaschine nach Anspruch 1, dadurch gekennzeichnet, dass der Modul (11) mit einem ihn bezeichnenden Code versehen ist, dass an der Nähmaschine ein Leser für diesen Code vorhanden ist, dass im Mikroprozessor (10) der Nähmaschine Festspeicher für Steuerdaten vorgesehen sind, dass Mittel zur Eingabe von Bezeichnungen von Stichmustern an der Nähmaschine vorgesehen sind, und dass Mittel vorhanden sind, um anhand des Codes und der Bezeichnung eines Stichmusters die Steuerdaten aus dem diesem Stichmuster entsprechenden Speicherplatz der Festspeicher abzurufen.

8. Nähmaschine nach Anspruch 7, dadurch gekennzeichnet, dass der Modul (11) keine Speicher aufweist.

**Claims**

1. A sewing machine having an electronic stitch pattern control, wherein at least one module is provided which is optionally connectable to the electronic system of the sewing machine in order to offer a selection of stitch patterns, and wherein selecting means are provided on the sewing machine for the identification and selection of additional stitch patterns, characterized in that at least one flat, card-shaped push-in or plug-in module (11,111) free of operating elements is provided which is visibly insertable in the front wall of the sewing machine housing, the visible side of the module being provided with stitch symbols (17) and designations associated thereto, and said selecting means of the sewing machine (18,19) allowing to recall stitch patterns displayed on the module, by way of said associated designations, and the insertion of a module (11,111) allowing data transfer between the latter and the electronic system (10) of the sewing machine.

2. A sewing machine according to claim 1, characterized in that the module (11) is provided with memories (RAM, ROM), and that data from the memories are recallable by means of the selecting means (18,19) and the electronic system (10) of the sewing machine.

3. A sewing machine according to claim 2, characterized in that the module is provided on one side with said memories (RAM, ROM), and on the other side with stitch symbols (17).

4. A sewing machine according to claim 2 or 3, characterized in that said module (11) is provided with a microprocessor (13).

5. A sewing machine according to claim 4, characterized in that a support of said module is provided on one side with a microprocessor card (13) (smart card).

6. A sewing machine according to claim 4 or 5, characterized in that the data transfer from said module (11) to said microprocessor (10) of the sewing machine is effected through a serial interface.

7. A sewing machine according to claim 1, characterized in that said module (11) is provided with a code which identifies it, that the sewing machine is provided with a reader for said code, that fixed memories for control data are provided in the microprocessor (10) of the sewing machine, that means for entering stitch pattern designations are provided on the sewing machine, and in that means are provided in order to recall, by way of the code and the designation of a stitch pattern, the control data from the memory location of the fixed memories corresponding to that stitch pattern.

8. A sewing machine according to claim 7, characterized in that said module (11) comprises no memories.

**Revendications**

1. Machine à coudre avec commande électronique des points de couture, dans laquelle au moins un module est prévu qui est susceptible d'être optionnellement relié à l'électronique de la machine à coudre, afin d'offrir un choix de points de couture, des moyens de sélection pour l'identification et la sélection de points de couture additionnels étant prévus sur la machine à coudre, caractérisée en ce qu'au moins un module (11,111) plat, en forme de carte et libre d'organes de commande est prévu qui est visiblement insérable ou enfichable dans la paroi frontale du boîtier de la machine à coudre, le côté visible du module présentant des symboles de points de couture (17) et des désignations y correspondantes, lesdits moyens de sélection de la machine à coudre (18,19) permettant de rappeler, au moyen des désignations correspondantes, des points de couture représentés sur le module, et la mise en place d'un module (11,111) permettant un tranfert de données entre celui-ci et l'électronique (10) de la machine à coudre.

2. Machine à coudre selon la revendication 1, caractérisée en ce que le module (11) comporte des mémoires (RAM, ROM), et que des données sont prélevées des mémoires par l'intermédiaire des moyens de sélection (18,19) et de l'électronique (10) de la machine à coudre.

3. Machine à coudre selon la revendication 2, caractérisée en ce que le module comporte d'un côté les mémoires (RAM, ROM), et de l'autre côté des symboles pour points de couture (17).

4. Machine à coudre selon la revendication 2 ou 3, caractérisée en ce que le module (11) comporte un microprocesseur (13).

5. Machine à coudre selon la revendication 4, caractérisée en ce qu'un support du module comporte d'un côté une carte microprocesseur (13) (smart card).

6. Machine à coudre selon la revendication 4 ou 5, caractérisée en ce que le transfert de données du module (11) au microprocesseur (10) de la machine à coudre est effectué par un interface sériel.

7. Machine à coudre selon la revendication 1, caractérisée en ce que le module (11) est pourvu d'un code qui l'identifie, que la machine à coudre comporte un lecteur pour ce code, que des mémoires fixes pour des données de commande sont prévues dans le microprocesseur (10) de la machine à coudre, que des moyens pour l'introduction de désignations pour points de couture sont prévus sur la machine à coudre, et qu'il existe des moyens pour prélever, au moyen dudit code et de ladite désignation d'un point de couture, les données de commande de l'emplacement des mémoires fixes qui correspond à ce point de couture.

8. Machine à coudre selon la revendication 7, caractérisée en ce que le module (11) ne comporte pas de mémoires.

# FIG.1

## FIG.2

## FIG.3

## FIG.4

FIG. 5

EP 0 276 629 B1